(19) Europäisches Patentamt
European Patent Office
Office européen des brevets

(11) **EP 3 761 174 A1**

(12) **EUROPEAN PATENT APPLICATION**

(43) Date of publication:
**06.01.2021 Bulletin 2021/01**

(51) Int Cl.:
***G06F 9/48*** *(2006.01)*

(21) Application number: **20182855.5**

(22) Date of filing: **29.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.07.2019 JP 2019125175**

(71) Applicant: **FUJITSU LIMITED**
**Kanagawa 211-8588 (JP)**

(72) Inventors:
• **Iijima, Naoki**
**Tokyo, 104-0061 (JP)**
• **Amemiya, Kouichirou**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **SWITCHING PROGRAM, SWITCHING APPARATUS, AND SWITCHING METHOD**

(57)     A process includes calculating a data movement amount of data to be moved, among data held by a first server, based on a data amount of unprocessed data that has not been read from a second server which executes the task processing function, a first transfer speed determined from a transfer speed of a bandwidth of the first server and a transfer speed of a bandwidth of a third server which is a movement destination of data held by the first server, and a second transfer speed which is a transfer speed of reading data from the second server, specifying a movement start position of data that moves from the first server to the third server in the data held by the first server, based on the calculated data movement amount, and starting data movement, from the movement start position, from the first server to the third server.

FIG. 7

Printed by Jouve, 75001 PARIS (FR)

**Description**

FIELD

The embodiments discussed herein are related to a switching program, a switching apparatus, and a switching method.

BACKGROUND

In the related art, there is a system in which data is collected and a specific process is performed based on the collected data. As such a system, for example, a so-called distributed file system is used in which different processes are shared by a plurality of servers.

For example, there is a technique of providing a resource of a distributed file system in order to execute a task as a specific process. In this technique, tasks, schedulers, and pools are re-allocated based on the need for load balancing of the distributed file system.

There is also a technique of reducing the overhead required for a time synchronization process and increasing the efficiency of a data collection process by a data collection device. In this technique, for a relay terminal that performs a message transfer process, the time required for the transfer process (transfer delay time) is measured as a measurement delay time, and is added to the time information of a transfer message.

In addition, there is a technique of preventing the read performance of an external application from being lowered. In this technique, data is re-located in order to level the load in the distributed file system. In the re-location, the maximum re-location amount is set as the data amount to be re-located in one data re-location execution process. Further, the data server closest to a re-location destination data server is used as a data server of a block copy source

Related technologies are disclosed in, for example, Japanese National Publication of International Patent Application No. 2015-503811 and Japanese Laid-Open Patent Publication Nos. 2011-091624 and 2015-022327.

SUMMARY

An aspect of the present disclosure suppresses traffic accompanying switching of server functions and shortens the interruption time of processing.

According to an aspect of the embodiments, a switching program that causes a computer to execute a process, the process includes when a first server that executes a reception function of receiving data from a device receives a calculation request for switching a function from the reception function to a task processing function of processing data, calculating a data movement amount of data to be moved, among data held by the first server, based on a data amount of unprocessed data that has not been read from a second server which executes the task processing function, a first transfer speed determined from a transfer speed of a bandwidth of the first server and a transfer speed of a bandwidth of a third server which is a movement destination of data held by the first server, and a second transfer speed which is a transfer speed of reading data from the second server, specifying a movement start position of data that moves from the first server to the third server in the data held by the first server, based on the calculated data movement amount, and starting data movement, from the movement start position, from the first server to the third server.

BRIEF DESCRIPTION OF DRAWINGS

FIG. 1 is an image diagram of a case where a management system is applied to an edge computing environment;
FIG. 2 is a diagram illustrating an example of a case where reading of data is interrupted when the function of a server is switched;
FIG. 3 is a diagram illustrating an example of a case where data is moved in advance when the function of a server is switched;
FIG. 4 is a diagram illustrating a relationship between data to be read and data to be moved;
FIG. 5 is an image diagram illustrating a relationship between data amounts;
FIG. 6 is a diagram illustrating an example of a case where a data movement amount of data is calculated when the function of a server is switched;
FIG. 7 is a block diagram illustrating a schematic configuration of a management system according to an embodiment of the present disclosure;
FIG. 8 is a block diagram illustrating details of a configuration of each server of the management system;
FIG. 9 is a block diagram illustrating a schematic configuration of a computer functioning as a management server;
FIG. 10 is a block diagram illustrating a schematic configuration of a computer functioning as a data reception server or a task processing server;
FIG. 11 is a sequence diagram illustrating the flow of data and task processing, and a periodic process;
FIG. 12 is a diagram illustrating an example of a routing table DB;
FIG. 13 is a diagram illustrating an example of a data DB;
FIG. 14 is a diagram illustrating an example of a task processing DB;
FIG. 15 is a view illustrating an example of a task DB;
FIG. 16 is a diagram illustrating an example of a load information DB;
FIG. 17 is a diagram illustrating an example of a bandwidth information DB;
FIG. 18 is a sequence diagram illustrating the flow of a process when the data reception server is switched to the task processing server according to the technique of the embodiment of the present disclosure;

FIG. 19 is a diagram illustrating the configuration of a management system according to a flow of a switching process; and

FIG. 20 is an image diagram illustrating an example of a relationship among data, a topic, and a task.

DESCRIPTION OF EMBODIMENTS

In the distributed file system, the role of each server is divided into, for example, a function of receiving and collecting data and a function of acquiring data and executing a task that is a specific process. As for the type of a server, a server that receives data is defined as a data reception server, and a server that executes a task is defined as a task processing server. In this case, the process of switching the function of the server is performed according to the load of the server that plays each of roles.

However, in the related art, when the data reception server is switched, there is a problem regarding data movement accompanying the switching.

In the related art, there is a problem that the switching of the data reception server causes a waiting time to occur in the task processing server that has acquired data from the data reception server.

Further, even when data is moved before notifying the task processing server of a switching instruction, there is a problem in the traffic of the data to be moved. This is because it is not possible to grasp the switching timing of the data reception server, and it is necessary to move all the data or the remaining data at the time of starting the movement. In this case, since the data read by the task processing server before switching is also copied to a data reception server of a movement destination, useless traffic is generated. In addition, when the movement destination is changed for a certain reason, such as when the data reception server of the movement destination stops, there is another problem that more useless traffic is generated.

Hereinafter, an example of an embodiment according to a technology of suppressing traffic caused by switching of server functions and shortening an interruption time of processing will be described in detail with reference to the drawings.

First, descriptions will be made on the background on which the embodiment is based and the outline of the present embodiment. The technique of the present embodiment is applied to a management system in which data is collected and a task is executed as a specific process based on the collected data. The management system is a so-called distributed file system. In a distributed file system, different servers share different roles. According to the role, the types of a server in the management system are divided into a data reception server as a server that receives data and a task processing server as a server that executes a task, and these servers perform functions of data reception and task processing, respectively.

The management system is used to execute various tasks such as collecting data of automobiles and analyzing operation information thereof, and collecting and analyzing moving states of people in a facility.

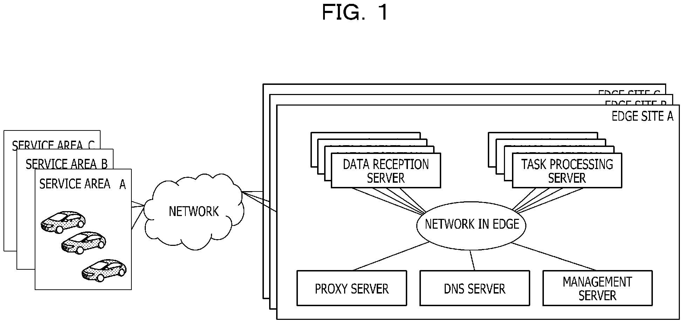

The management system is used in a so-called edge computing environment. An edge computing has a structure in which a server near each user's terminal is identified as an edge, and servers are distributed at each edge site to provide a service having a high real-time performance by a distributed process. In the edge computing, for each edge site, streaming data generated in an area in charge of the edge site is collected, and the collected data is processed. FIG. 1 is an image diagram of a case where the management system is applied to the edge computing environment. As illustrated in FIG. 1, there are an edge site and a service area in charge of the edge site. A plurality of data reception servers and a plurality of task processing servers share and perform a processing for each edge site. In the service area, a large amount of data is generated as streaming data from each of devices such as automobiles and sensors on the road, and such data is transmitted from each device in the service area to the edge site via a network.

Here, it is assumed that the data amount of data and the task amount of a task change. The data amount and the task amount change depending on, for example, the movement of data sources such as automobiles or events such as sudden accidents. Therefore, it is difficult to estimate the data amount and the task amount in advance. For this reason, it is necessary to switch the function of the server in the management system. The management system does not fix a ratio of the number of data reception servers and the number of task processing servers according to the data amount and the task amount, but switches roles to dynamically adjust the ratio of servers. As such, the function of the server is switched to distribute the load and perform a processing in more real time.

When the task processing server is switched to the data reception server, the task waiting for processing in the task processing server to be switched is re-located to another task processing server. When the data reception server is switched to the task processing server, the data held in the data reception server to be switched is moved to the data processing server of another movement destination. The destination of the data generated at any time also changes the routing of the DNS server such that the data is sent to the data processing server of the movement destination.

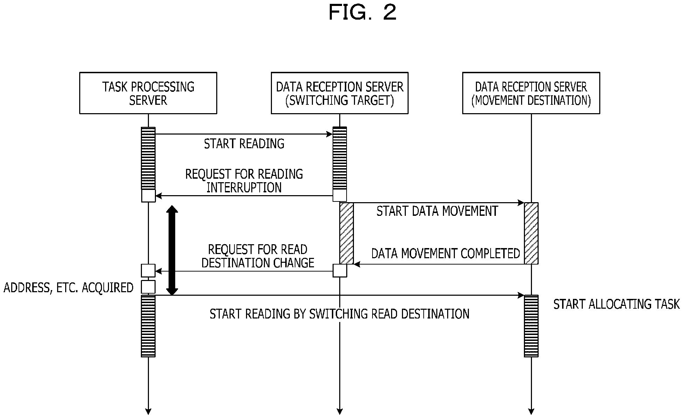

Here, descriptions will be made on a problem occurring when the data reception server is switched to the task processing server. When the data reception server of data is switched to the task processing server, it is necessary to move the data stored in the data reception server to another data reception server. However, during that time, the reading of data from the task processing server is interrupted. FIG. 2 is a diagram illustrating an example of a case where reading of data is interrupted when a function of a server is switched. As illustrated in FIG. 2, the task processing server receives a read interruption request and interrupts the reading of data. The data reception server to be switched starts moving data to the data reception server of the movement destination of data. The task processing server interrupts the reading of data until the data movement to the data reception server of the movement destination is completed. Therefore, when switching the data reception server, a waiting time of the task processing server occurs while data is being moved. As a result, the processing time of the task processing server becomes longer.

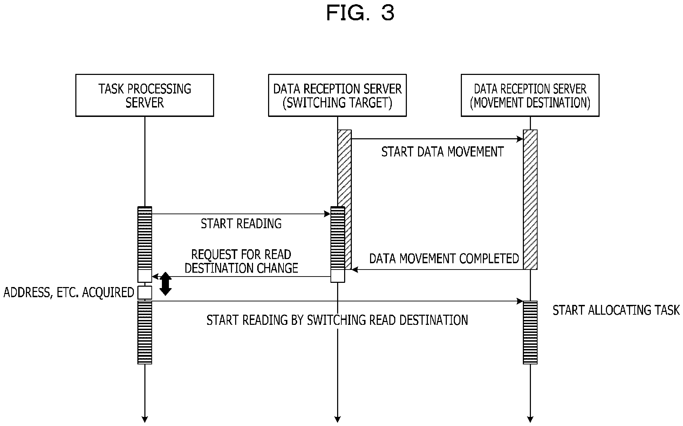

In addition, when data is moved in advance before switching in order to eliminate the above-described waiting time, there is a problem that unnecessary traffic is generated. FIG. 3 is a diagram illustrating an example of a case where data is moved in advance when the function of a server is switched. As illustrated in FIG. 3, when data is moved in advance, the interruption of data reading may be shortened. However, since the task processing server reads data even during the movement, extra data that is not read even when the movement is performed is also to be moved, and extra traffic is generated.

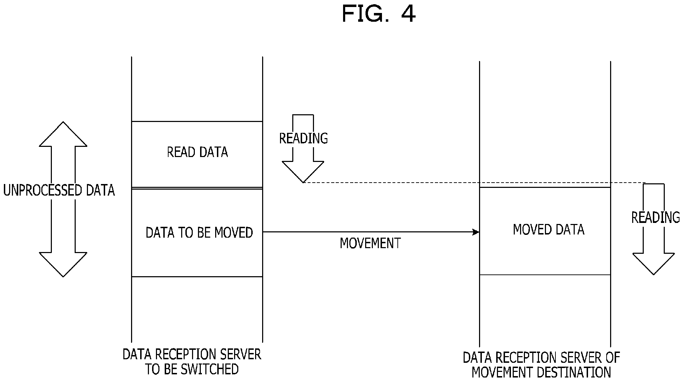

Therefore, in the present embodiment, among unprocessed data that has not been read, a data amount ratio between the data read during the movement and the data read after the movement is completed, that is, the data to be moved is calculated. FIG. 4 is a diagram illustrating a relationship between data to be read and data to be moved. As illustrated in FIG. 4, the data read during the movement and the data to be moved are separated.

A method of calculating the data amount ratio will be described. The data amount ratio is calculated according to the following equations (1) and (2) such that the read time of data read during movement and the transfer time of data to be moved may become equal.

$$\frac{D_c}{TP_{i,j}} = \frac{D_r}{R_{D_r}} \quad \text{... (1)}$$

$$D_c = \frac{TP_{i,j}}{TP_{i,j} + R_{D_r}} D_a \quad \text{... (2)}$$

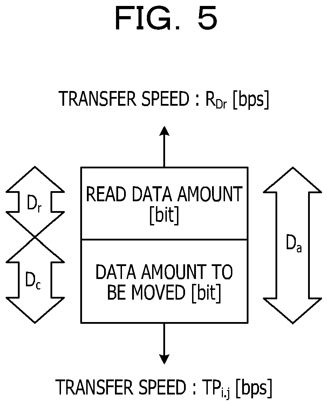

Here, the symbol "$D_c$" refers to the data amount of data to be moved, the symbol "$D_r$" refers to the data amount of data read from a server i during movement, and the symbol "Da" refers to the data amount of unprocessed data that has not been read. The unit of the data amount is bit. It is assumed that the data reception server to be switched is i and the data reception server of the movement destination is j. The symbol "$TP_{i,j}$" refers to a transfer speed of the bandwidth between the servers i and j, and $R_{D_r}$ (hereinafter, referred to as $R_{D_r}$) refers to a transfer speed of reading from the task processing server. The unit of the transfer speed is bps. FIG. 5 is an image diagram illustrating a relationship between data amounts. As illustrated in FIG. 5, the unprocessed data amount $D_a$ is a sum of the data amount $D_c$ and the data amount $D_r$. By calculating the ratio in this manner, the data amount $D_c$ may be calculated as the data movement amount.

When the transfer speed $TP_{i,j}$ of the bandwidth is the same as the transfer speed $R_{D_r}$ of reading, the data amount $D_c$ and the data amount $R_r$ are each 1/2 of the data amount $D_a$ with respect to the data amount $D_a$.

A case where the read time is the same as the transfer time will be described. For example, it is assumed that the data amount $D_a$ of unprocessed data is 600 Mbps, the transfer speed $TP_{i,j}$ of the bandwidth is 6 Mbps, and the transfer speed $R_{D_r}$ of reading is 6 Mbps. In this case, the data amount $D_c$ and the data amount $D_r$ may be calculated as 300 Mbit according to the above equation (2). Further, the read time and the transfer time in the above equation (1) may be respectively calculated as 50 seconds. That is, it is possible to specify that the data movement start position is a position of 300 bits from the data read last.

A case where the read time and the transfer time are not the same will be described. For example, it is assumed that the data amount $D_a$ of unprocessed data is 600 Mbps, the transfer speed $TP_{i,j}$ of the bandwidth is 6 Mbps, and the transfer speed $R_{D_r}$ of reading is 2 Mbps. In this case, the data amount $D_c$ and the data amount $D_r$ may be calculated as 450 Mbit and 150 Mbit, respectively, according to the above equation (2). Further, the read time and the transfer time in the above equation (1) may be respectively calculated as 75 seconds. That is, it is possible to specify that the data movement start position is a position of 450 bits from the data that is read last. Meanwhile, the same calculation may be performed even when the relationship between the bandwidth and the transfer speed of reading is reversed.

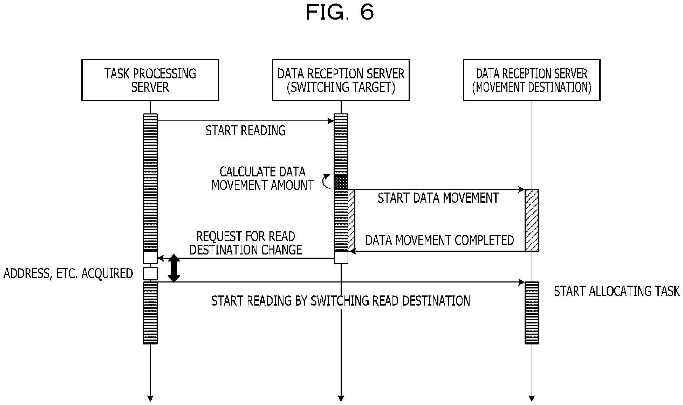

FIG. 6 is a diagram illustrating an example of a case where a data movement amount of data is calculated when a function of a server is switched. As illustrated in FIG. 6, the interruption of reading is short, and no extra traffic is generated.

A method of obtaining the data amount ratio has been described above. In the embodiment described below, the same calculation is performed for each topic that is the type of data. The details of the topic will be described later in the explanation of the operation.

In the present embodiment, the function switching of the server in the management system is implemented by using the method described above. Hereinafter, the configuration of the embodiment of the present disclosure will be described.

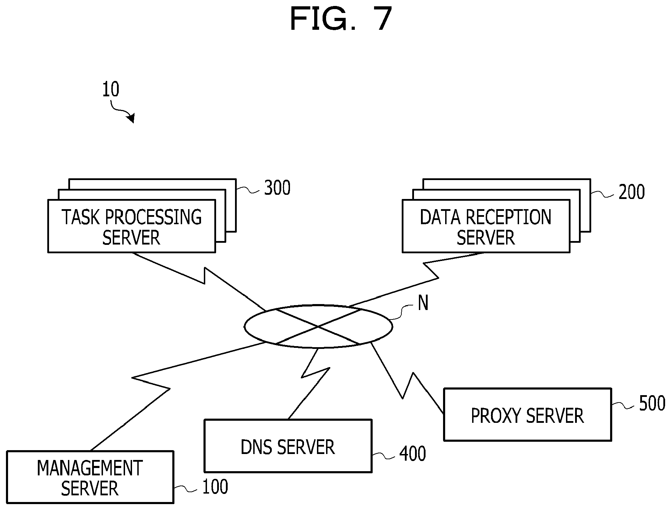

FIG. 7 is a block diagram illustrating a schematic configuration of a management system according to an embodiment of the present disclosure. As illustrated in FIG. 7, the management system 10 according to the present embodiment includes a management server 100, a plurality of data reception servers 200, a plurality of task processing servers 300, a DNS server 400, and a proxy server 500. Each server is connected via a network N such as the Internet.

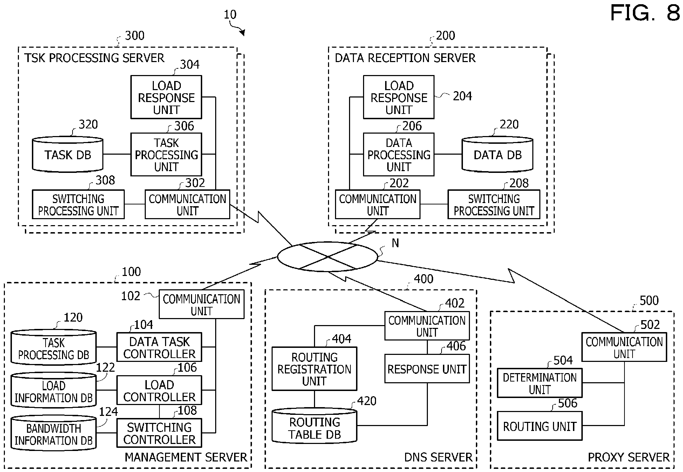

FIG. 8 is a block diagram illustrating details of a configuration of each server of the management system 10. Each server communicates via one of communication units 102, 202, 302, 402, and 502 provided in each server, and transmits and receives various information. In addition, since each process performed in each server will be described in an operation described later, the description of the process of each unit will be omitted herein.

The management server 100 includes a communication unit 102, a data task controller 104, a load controller 106, a switching controller 108, a task processing DB 120, a load information DB 122, and a bandwidth information DB 124.

Since the plurality of data reception servers 200 have the same configuration in each server, the configuration of one data reception server 200 is taken as an example. The data reception server 200 includes a communication unit 202, a load response unit 204, a data processing unit 206, a switching processing unit 208, and a data DB 220.

Since the plurality of task processing servers 300 have the same configuration in each server, the configuration of one task processing server 300 is taken as an example. The task processing server 300 includes a communication unit 302, a load response unit 304, a task processing unit 306, a switching processing unit 308, and a task DB 320.

The DNS server 400 includes a communication unit 402, a routing registration unit 404, a response unit 406, and a routing table DB 420.

The proxy server 500 includes a communication unit 502, a determination unit 504, and a routing unit 506.

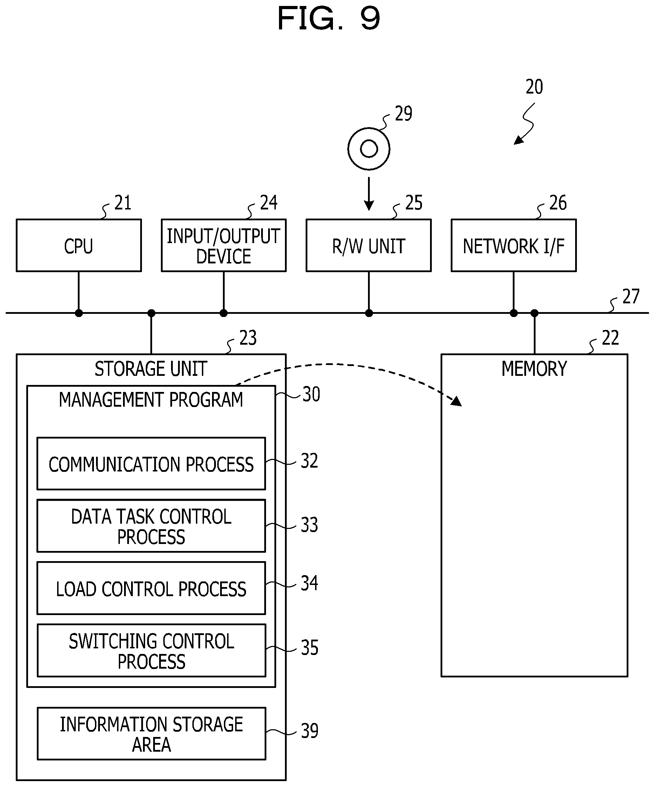

The management server 100 may be implemented by, for example, the computer 20 illustrated in FIG. 9. The computer 20 includes a central processing unit (CPU) 21, a memory 22 serving as a temporary storage area, and a non-volatile storage unit 23. Further, the computer 20 includes an input/output device 24, a read/write (R/W) unit 25 that controls reading and writing of data from and to a storage medium 29, and a communication interface (I/F) 26 that is connected to a network such as the Internet. The CPU 21, the memory 22, the storage unit 23, the input/output device 24, the R/W unit 25, and the communication I/F 26 are connected to each other via a bus 27.

The storage unit 23 may be implemented by a hard disk drive (HDD), a solid state drive (SSD), a flash memory, or the like. The storage unit 23 serving as a storage medium stores a management program 30 that causes the computer 20 to function as the management server 100. The management program 30 includes a communication process 32, a data task control process 33, a load control process 34, and a switching control process 35.

The CPU 21 reads out the management program 30 from the storage unit 23, expands the program in the memory 22, and sequentially executes the processes of the management program 30. The CPU 21 operates as the communication unit 102 illustrated in FIG. 8 by executing the communication process 32. In addition, the CPU 21 operates as the data task controller 104 illustrated in FIG. 8 by executing the data task control process 33. Further, the CPU 21 operates as the load controller 106 illustrated in FIG. 8 by executing the load control process 34. The CPU 21 operates as the switching controller 108 illustrated in FIG. 8 by executing the switching control process 35. Further, the CPU 21 reads information from the information storage area 39 and expands each of the task processing DB 120, the load information DB 122, and the bandwidth information DB 124 in the memory 22. Thus, the computer 20 that has executed the management program 30 functions as the management server 100. Meanwhile, the CPU 21 that executes the program is hardware.

In the meantime, the functions implemented by the management program 30 may well be implemented by, for example, a semiconductor integrated circuit, more specifically, an application specific integrated circuit (ASIC), etc.

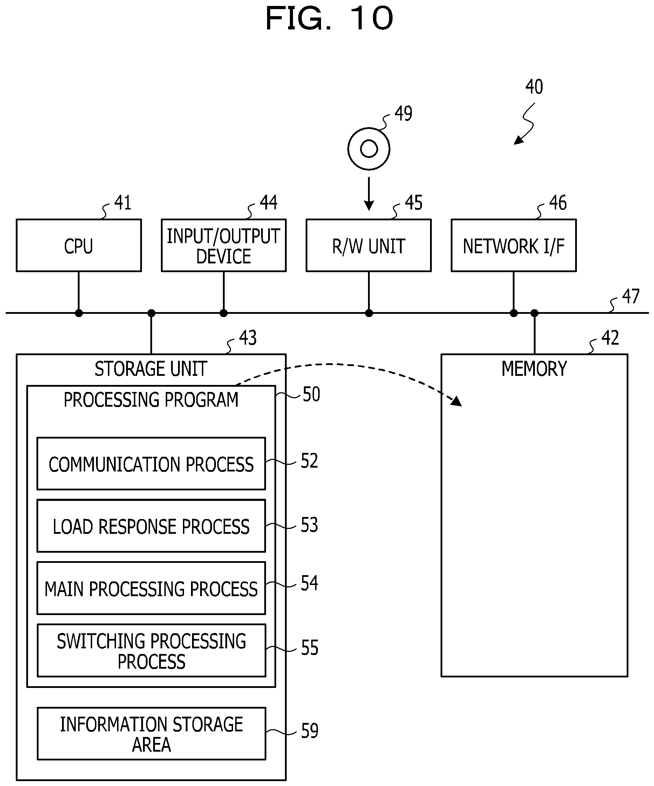

Since the data reception server 200 and the task processing server 300 have the same configuration, these servers may be implemented by, for example, the computer 40 illustrated in FIG. 10. The computer 40 includes a CPU 41, a memory 42 serving as a temporary storage area, and a non-volatile storage unit 43. Further, the computer 40 includes an input/output device 44, an R/W unit 45 that controls reading and writing of data to and from a storage medium 49, and a communication I/F 46 that is connected to a network such as the Internet. The CPU 41, the memory 42, the storage unit 43, the input/output device 44, the R/W unit 45, and the communication I/F 46 are connected to each other via a bus 47.

The storage unit 43 may be implemented by an HDD, an SSD, a flash memory, or the like. The storage unit 43 as a storage medium stores a processing program 50 that causes the computer 40 to function as the task processing server 300 or the data reception server 200. The processing program 50 has a communication process 52, a load response process 53, a main processing process 54, and a switching processing process 55.

The CPU 41 reads out the processing program 50 from the storage unit 43, expands the program in the memory 42, and sequentially executes the processes of the processing program 50.

The operation in the case of the data reception server 200 will be described. The CPU 41 operates as the communication unit 202 illustrated in FIG. 8 by executing the communication process 52. Further, the CPU 41 operates as the load response unit 204 illustrated in FIG. 8 by executing the load response process 53. The CPU 41 also operates as the data processing unit 206 illustrated in FIG. 8 by executing the main processing process 54. The CPU 41 operates as the switching processing unit 208 illustrated in FIG. 8 by executing the switching processing process 55. Further, the CPU 41 reads information from the information storage area 59 and expands the data DB 220 in the memory 42. Thus, the computer 40 that has executed the processing program 50 functions as the data reception server 200. Meanwhile, the CPU 41 that executes the program is hardware. Further, the operation in the case of the task processing server 300 will be described. The CPU 41 operates as the communication unit 302 illustrated in FIG. 8 by executing the communication process 52. Further, the CPU 41 operates as the load response unit 304 illustrated in FIG. 8 by executing the load response process 5. The CPU 41 also operates as the task processing unit 306 illustrated in FIG. 8 by executing the main processing process 54. The CPU 41 operates as the switching processing unit 308 illustrated in FIG. 8 by executing the switching processing process 55. Further, the CPU 41 reads information from the information storage area 59 and expands the task DB 320 in the memory 42. Thus, the computer 40 that has executed the processing program 50 functions as the task processing server 300.

Meanwhile, the functions implemented by the processing program 50 may well be implemented by, for example, a semiconductor integrated circuit, more specifically, an ASIC or the like.

Since the DNS server 400 and the proxy server 500 may be implemented by a general DNS server and a server used as a proxy server, a description of the configuration of the computer will be omitted.

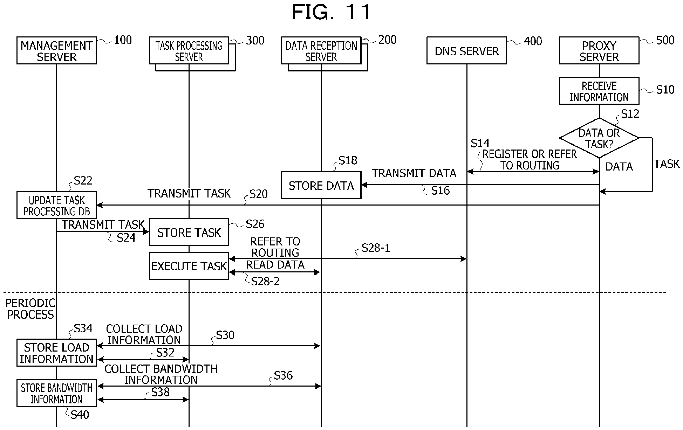

Next, the operation of the management system 10 according to the present embodiment will be described. First, the flow of processing that is a premise of the method of the present embodiment will be described with reference to the sequence diagram of FIG. 11. FIG. 11 is a sequence diagram illustrating the flow of data and task processing, and a periodic process.

First, data and task processing will be described with reference to FIG. 11. The processing of data and tasks is a processing presupposed in the present embodiment, but is not a main processing, and thus will be described in a simplified manner.

The proxy server 500 receives information of data or task (S10). The determination unit 504 of the proxy server 500 determines whether the information is data or a task (S12).

The data includes a destination address, a source address, a topic, and a data entity. The topic represents a type of data and is a unit in which data read by a task is put together. The task reads the topic and executes the task. Further, data may be associated with a plurality of topics. Meanwhile, the destination address is the address of the proxy server 500, and the source address is the address of the device that has transmitted the data.

The task includes a destination address, a source address, a task ID, and a topic required for processing the task. Tasks are executed by reading data in units of topics. Meanwhile, the destination address is the address of the proxy server 500, and the source address is the address of the device that has transmitted the task.

When the information determined in S12 is data, the proxy server 500 registers or refers to the DNS server 400 by the routing unit 506 (S14). When the routing destination of the data topic is in the routing table DB 420, the address is acquired as the destination. When the routing destination of the data topic is not in the routing table DB 420, the routing registration unit 404 registers a routing in the routing table DB 420. For the address of the data reception server 200 to be registered, for example, the address of the data reception server 200 whose resource memory usage rate is low may be registered with reference to the load information DB 122 of the management server 100.

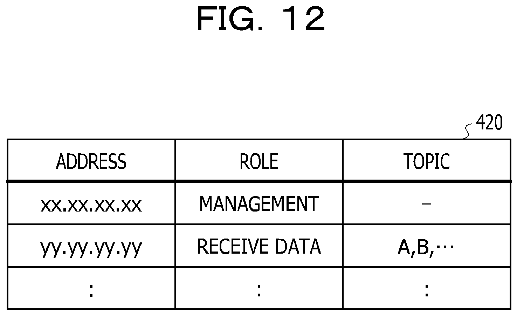

As illustrated in FIG. 12, the routing table DB 420 stores an address which is an address of a server, the role of the server, and a topic corresponding to a task. The role is either a "management" indicating that the server is the management server 100 or a "data reception" indicating that the server is the data reception server 200.

The proxy server 500 refers to the address of the routing table DB 420 by the routing unit 506 (S14), and transmits data to the data reception server 200 of the address obtained by referring to the address (S16). The data processing unit 206 stores the data received by the data reception server 200 in the data DB 220 (S18).

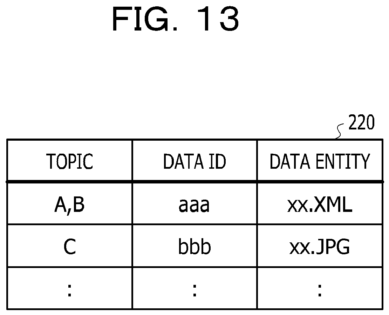

As illustrated in FIG. 13, the data DB 220 stores a topic to which data is referred, a data ID of the data, and a data entity. The data entity is an arbitrary file to be processed in the task, such as, for example, XML or JPG.

When a determination made in S12 is a task, the proxy server 500 transmits the task to the management server 100 using the routing unit 506 (S20). The task transmitted in S20 is received by the management server 100, and the data task controller 104 determines the task processing server 300 that executes the task to update the task processing DB 120 (S22). The task processing server that executes the task may refer to the load information DB 122 and select the task processing server 300 having a low memory usage rate. Meanwhile, the data task controller 104 may schedule and determine the task execution timing.

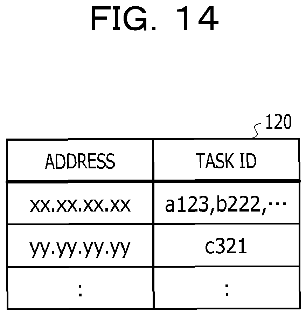

As illustrated in FIG. 14, the task processing DB 120 stores the address of the task processing server 300 and the task ID.

The data task controller 104 transmits the received task to the task processing server 300 at the corresponding address in the task processing DB 120 (S24). The task received by the task processing server 300 is stored in the task DB 320 (S26).

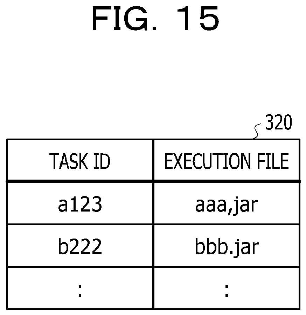

As illustrated in FIG. 15, the task DB 320 stores a task ID and an execution file. The execution file is stored in a compressed form in which the execution file in which the processing contents of the task are described is compressed.

The task processing server 300 executes the tasks in the order stored in the task DB 320 (S28). When executing the task, the task processing unit 306 refers to the data routing to the DNS server 400 (S28-1) and receives the address of the data reception server 200 from which the data is read. The task processing unit 306 reads data included in a topic necessary for processing the task from the received address of the data reception server 200 (S28-2), and executes the task.

Further, in the management system 10, load information and bandwidth information are collected as a periodic processing. The task processing server 300 and the data reception server 200 transmit the load information to the management server 100 (S30, S32). The load information is stored in the load information DB 122 (S34). Further, the management server 100 collects the bandwidth information (S36, S38) and stores the information in the bandwidth information DB 124 (S40).

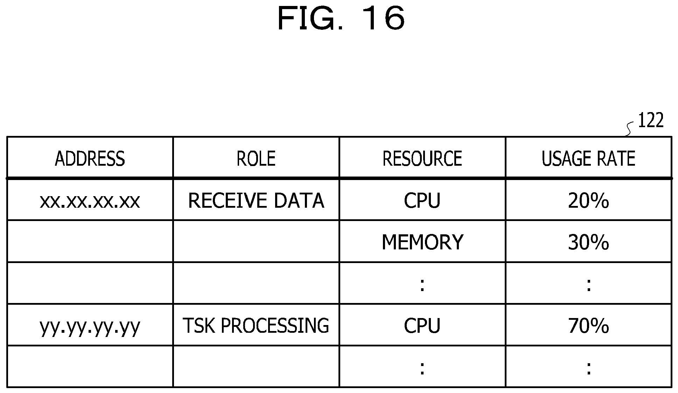

As illustrated in FIG. 16, the load information DB 122 stores server addresses, server roles, resources such as, for example, a CPU and a memory, and resource usage rates. The role is either a "data reception" or a "task processing."

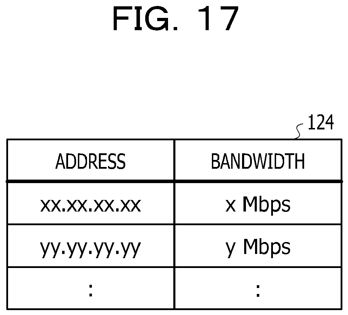

As illustrated in FIG. 17, the bandwidth information DB 124 stores server addresses and server bandwidth transfer speeds (Mbps).

The load response unit 304 of the task processing server 300 and the load response unit 204 of the data reception server 200 periodically transmit load information of their own servers to the management server 100.

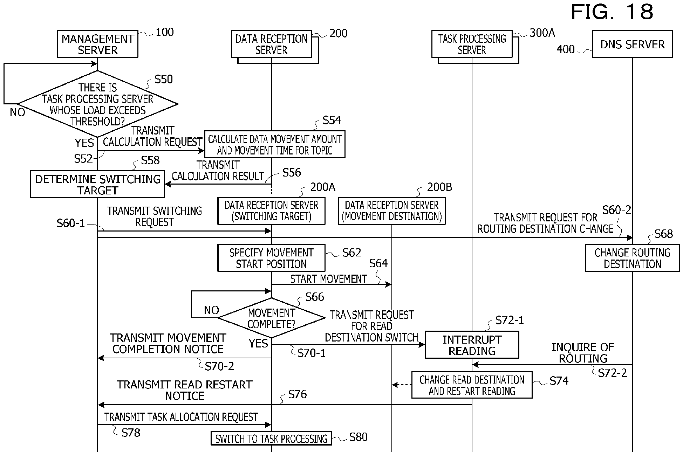

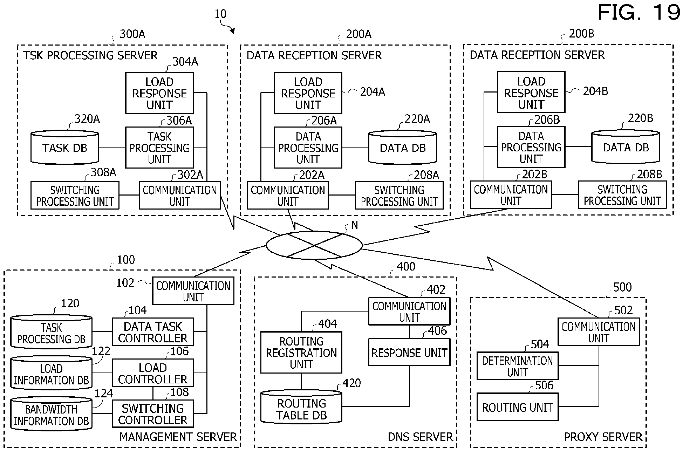

Next, with reference to the sequence diagram of FIG. 18, the flow of processing when switching the role of the data reception server 200 will be described. The sequence diagram of FIG. 18 is a sequence diagram for explaining the flow of processing when switching the data reception server 200 to the task processing server 300 by the method according to the embodiment of the present disclosure. FIG. 19 is a diagram illustrating a configuration of a management system according to a flow of a switching process. In the configuration of FIG. 19, an example will be described in which data is moved to the data reception server 200B by taking the data reception server 200A as a switching target. In the following description, all the data reception servers 200 managed by the management system 10 are referred to as "respective data reception servers 200." Further, the data reception server 200 to be switched is referred to as a "data reception server 200A," and the data reception server 200 of the movement destination of data is referred to as a "data reception server 200B." Further, all the task processing servers 300 managed by the management system 10 are referred to as "respective task processing servers 300," and the task processing server 300 that reads data from the data reception server 200A to be switched is referred to as a "task processing server 300." Meanwhile, the data reception server 200A is an example of a first server that executes a reception function of receiving data from a device. The task processing server 300A is an example of a second server that executes a task processing function of processing data. The data reception server 200B is an example of a third server which is a movement destination of data.

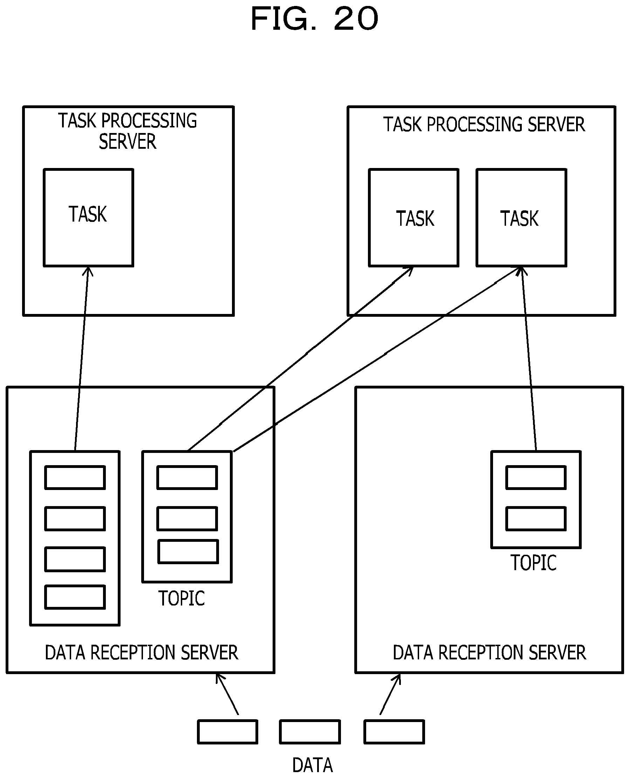

In the meantime, since the calculation of the data movement amount and the movement time is performed in units of topics, the relationship among data, topics, and tasks is organized. FIG. 20 is an image diagram illustrating an example of a relationship among data, a topic, and a task. One or more topics are read and the task is executed for each of the topics. Topics contain multiple data. It is assumed that the order of reading data is determined in the topic. The topic is an example of a processing unit.

In the sequence diagram of FIG. 18, the load controller 106 of the management server 100 first determines whether there is a task processing server 300 whose load exceeds a predetermined threshold in the load information DB 122 (S50). The load may be determined from the resource usage rate of the load information DB 122. When it is determined that the threshold has not been exceeded, this determination processing is repeated. Meanwhile, the description of the case of determining the load on the data reception server 200 will be omitted. The load controller 106 transmits a movement time calculation request to each of the data reception servers 200 (S52).

In each of the data reception servers 200, the switching processing unit 208 calculates, for each topic of the data DB 220, the data movement amount according to the above equation (2) and the movement time according to the above equation (1) (S54). The calculation is performed based on the data amount $D_a$ of unprocessed data, the transfer speed $R_{Dr}$ of reading, and the transfer speed $TP_{i,j}$ of the bandwidth. As for the transfer speed $TP_{i,j}$ of the bandwidth, the transfer speed of the bandwidth between the data reception server 200 and the other data reception server 200 in the bandwidth information DB 124 of the management server 100 may be referred to and the transfer speed of the lower bandwidth may be adopted. Here, a server having the highest bandwidth transfer speed may be selected as the other data reception server 200. When the data reception server 200 that has performed the calculation becomes a switching target, the data reception server 200 selected here becomes the data reception server 200B of the movement destination. As for the transfer speed $R_{Dr}$ of reading, the transfer speed of the bandwidth between the data reception server 200 and the task processing server 300 that is reading data in the bandwidth information DB 124 of the management server 100 may be referred to and the transfer speed of the lower bandwidth may be adopted. It is assumed that the longest movement time among the movement times calculated for each topic is the movement time required to switch the data reception server 200. The calculation result is assumed to be the topic having the longest movement time, the data movement amount of the topic, and the movement time of the topic. Meanwhile, the transfer speed of the bandwidth used for the calculation may be included in the calculation request.

Each of the data reception servers 200 transmits the calculation result to the management server 100 (S56). The management server 100 causes the switching controller 108 to determine the data reception server 200 having the shortest movement time among the calculation results of the data reception servers 200 as the data reception server 200A to be switched (S58), and transmits a switching request thereto (S60-1). In addition, a request for routing destination change is transmitted to the DNS server 400 (S60-2). The change request includes the topic of the calculation result, the address of the data reception server 200A, and the address of the data reception server 200B of the movement destination.

When the data reception server 200A receives the switching request by the switching processing unit 208A, the switching processing unit 208A specifies the movement start position from the data movement amount for the data included in the topic having the longest moving time (S62). Here, the movement start position specified from the data movement amount will be described. For example, it is assumed that the unprocessed data amount of a topic is 600 Mbit and the data movement amount thereof is 300 Mbit. It is assumed that the breakdown of the unprocessed data amount includes 10 pieces of data of 60 MB each read in the order of A, B, C, D, E, F, G, H, I, and J as unprocessed topic data. In this case, since the data movement amount of 300 Mbit is half of the unprocessed data amount of 600 Mbit, the sixth data F after the fifth may be determined as the movement start position. Meanwhile, the determination method is merely an example, and any determination method may be used when the movement start position may be determined based on the data movement amount.

The switching processing unit 208A of the data reception server 200A starts moving data from the specified movement start position to the data reception server 200B (S64). The data reception server 200A determines whether movement of all data from the topic movement start position has been completed in the switching processing unit 208A (S66). When it is determined that the movement has been completed, the process proceeds to S70-1. When it is determined that the movement has not been completed, the determination is repeated, and the completion of the movement is waited for.

Upon receiving a request for the routing destination change, the DNS server 400 changes the routing destination of the topic of the calculation result (S68). Specifically, the address of the topic is changed from the address of the data reception server 200A to the address of the data reception server 200B. By changing the routing in this way, the destination of the data of the topic received by the proxy server 500 from the device becomes the data reception server 200B.

When the data movement has been completed, the data reception server 200A causes the switching processing unit 208A to transmit a read destination switching request to the task processing server 300A (S70-1). In addition, the movement completion notice is transmitted to the management server 100 (S70-2). Meanwhile, the read destination switching request may include the data movement start position. By including the movement start position, the task processing server 300A may check whether the data before the movement start position may be read. When it is not possible to read the data to the movement start position, the data that may not be read is read from the data reception server 200A, and from the movement start position, data is read from the data reception server 200B. This makes it possible to prevent inconsistency due to data loss.

When the task processing server 300A receives the read destination switching request, the switching processing unit 308A interrupts reading (S72-1) and inquires the DNS server 400 about the routing (S72-2). The switching processing unit 308A changes the data read destination from the inquiry result and restarts the data reading (S74). The switching processing unit 308A transmits a read restart notice to the management server 100 (S76).

Upon receiving the movement completion notice from the data reception server 200A and the read restart notice from the task processing server 300A, the management server 100 notifies the data reception server 200A of a task allocation start request (S78). Upon receiving the task allocation start request, the data reception server 200A switches the function of the server to the task processing (S80).

As described above, the management system according to the present embodiment calculates the data movement amount and the movement time based on the transfer rate and the unprocessed data amount. The data movement start position is specified from the data movement amount. For this reason, it is possible to suppress the traffic accompanying the switching of the function of the server and shorten the interruption time of the processing.

Further, for example, in the above-described embodiment, descriptions have been made on the case where the data reception server 200 calculates the data movement amount and the movement time as an example, but the present disclosure is not limited thereto. For example, necessary information may be transmitted from the data reception server 200 to the management server 100, and the management server 100 may calculate the data movement amount and the movement time.

Also, various programs may be read from a storage medium.

## Claims

1. A switching program that causes a computer to execute a process, the process comprising:

   when a first server that executes a reception function of receiving data from a device receives a calculation request for switching a function from the reception function to a task processing function of processing data, calculating a data movement amount of data to be moved, among data held by the first server, based on a data amount of unprocessed data that has not been read from a second server which executes the task processing function, a first transfer speed determined from a transfer speed of a bandwidth of the first server and a transfer speed of a bandwidth of a third server which is a movement destination of data held by the first server, and a second transfer speed which is a transfer speed of reading data from the second server; specifying a movement start position of data that moves from the first server to the third server in the data held by the first server, based on the calculated data movement amount; and starting data movement, from the movement start position, from the first server to the third server.

2. The switching program according to claim 1, wherein the data movement amount is calculated such that a time period from a start to a completion of the data movement based on the first transfer speed and an amount of data moving to the third server matches a readout time of the second server based on the second transfer speed and an amount of data read from the first server.

3. The switching program according to claim 1 or claim 2, wherein, in a case where the first server includes a plurality of data processing units, for each of the plurality of data processing units of the first server, the data movement amount is calculated based on a data amount of the unprocessed data, the first transfer speed, and the second transfer speed, a movement time of the data to be moved is calculated from the data movement amount, and the data movement amount of a data processing unit of the plurality of data processing units which is a longest movement time among movement times calculated for each of the plurality of data processing units is defined as a data movement amount of the first server.

4. The switching program according to claim 3, wherein, in a case where there is a plurality of first servers, the first server that has a shortest movement time is defined as the first server to be switched.

5. The switching program according to any one of claim 1 to claim 4, wherein a switching request for switching a readout destination to be notified to the second server includes the movement start position.

6. A switching apparatus comprising:

   a memory; and
   a processor coupled to the memory and configured to:

      when a first server that executes a reception function of receiving data from a device receives a calculation request for switching a function from the reception function to a task processing function of processing data, calculate a data movement amount of data to be moved, among data held by the first server, based on a data amount of unprocessed data that has not been read from a second server which executes the task processing function, a first transfer speed determined from a transfer speed of a bandwidth of the first server and a transfer speed of a bandwidth of a third server which is a movement destination of data held by the first server, and a second transfer speed which is a transfer speed of reading data from the second server; specify a movement start position of data that moves from the first server to the third server in the data held by the first server, based on the calculated data movement amount; and start data movement, from the movement start position, from the first server to the third server.

7. The switching apparatus according to claim 6, wherein the data movement amount is calculated such that a time period from a start to a completion of the data movement based on the first transfer speed and an amount of data moving to the third server matches a readout time of the second server based on the second transfer speed and an amount of data read from the first server.

8. The switching apparatus according to claim 6 or claim 7, wherein, in a case where the first server includes a plurality of data processing units, for each of the plurality of data processing units of the first server, the data movement amount is calculated based on a data amount of the unprocessed data, the first transfer speed, and the second transfer speed, a movement time of the data to be moved is calculated from the data movement amount, and the data movement amount of a data processing unit of the plurality of data processing units which is a longest movement time among movement times calculated for each of the plurality of data processing units is defined as a data movement amount of the first server.

9. The switching apparatus according to claim 8, wherein, in a case where there is a plurality of first servers, the first server that has a shortest movement time is defined as the first server to be switched.

10. The switching apparatus according to any one of claim 6 to claim 9, wherein a switching request for switching a readout destination to be notified to the second server includes the movement start position.

11. A switching method comprising:

when a first server that executes a reception function of receiving data from a device receives a calculation request for switching a function from the reception function to a task processing function of processing data, calculating a data movement amount of data to be moved, among data held by the first server, based on a data amount of unprocessed data that has not been read from a second server which executes the task processing function, a first transfer speed determined from a transfer speed of a bandwidth of the first server and a transfer speed of a bandwidth of a third server which is a movement destination of data held by the first server, and a second transfer speed which is a transfer speed of reading data from the second server; specifying a movement start position of data that moves from the first server to the third server in the data held by the first server, based on the calculated data movement amount; and starting data movement, from the movement start position, from the first server to the third server, by a processor.

12. The switching method according claim 11, wherein the data movement amount is calculated such that a time period from a start to a completion of the data movement based on the first transfer speed and an amount of data moving to the third server matches a readout time of the second server based on the second transfer speed and an amount of data read from the first server.

13. The switching method according to claim 11 or claim 12, wherein, in a case where the first server includes a plurality of data processing units, for each of the plurality of data processing units of the first server, the data movement amount is calculated based on a data amount of the unprocessed data, the first transfer speed, and the second transfer speed, a movement time of the data to be moved is calculated from the data movement amount, and the data movement amount of a data processing unit of the plurality of data processing units which is a longest movement time among movement times calculated for each of the plurality of data processing units is defined as a data movement amount of the first server.

14. The switching method according to claim 13, wherein, in a case where there is a plurality of first servers, the first server that has a shortest movement time is defined as the first server to be switched.

15. The switching method according to any one of claim 11 to claim 14, wherein a switching request for switching a readout destination to be notified to the second server includes the movement start position.

FIG. 1

SERVICE AREA C

SERVICE AREA B

SERVICE AREA A

NETWORK

EDGE SITE C

EDGE SITE B

EDGE SITE A

DATA RECEPTION SERVER

TASK PROCESSING SERVER

NETWORK IN EDGE

PROXY SERVER

DNS SERVER

MANAGEMENT SERVER

FIG. 2

| TASK PROCESSING SERVER | DATA RECEPTION SERVER (SWITCHING TARGET) | DATA RECEPTION SERVER (MOVEMENT DESTINATION) |

START READING

REQUEST FOR READING INTERRUPTION

START DATA MOVEMENT

REQUEST FOR READ DESTINATION CHANGE

DATA MOVEMENT COMPLETED

ADDRESS, ETC. ACQUIRED

START READING BY SWITCHING READ DESTINATION

START ALLOCATING TASK

## FIG. 3

# FIG. 4

UNPROCESSED DATA

READ DATA

READING

DATA TO BE MOVED → MOVEMENT → MOVED DATA

READING

DATA RECEPTION SERVER
TO BE SWITCHED

DATA RECEPTION SERVER OF
MOVEMENT DESTINATION

# FIG. 5

TRANSFER SPEED : $R_{Dr}$ [bps]

$D_r$

READ DATA AMOUNT [bit]

$D_a$

$D_c$

DATA AMOUNT TO BE MOVED [bit]

TRANSFER SPEED : $TP_{i,j}$ [bps]

## FIG. 6

# FIG. 7

FIG. 8

# FIG. 9

CPU _21_

INPUT/OUTPUT DEVICE _24_

R/W UNIT _25_ _29_

NETWORK I/F _26_

_20_

_27_

STORAGE UNIT _23_

MANAGEMENT PROGRAM _30_

COMMUNICATION PROCESS _32_

DATA TASK CONTROL PROCESS _33_

LOAD CONTROL PROCESS _34_

SWITCHING CONTROL PROCESS _35_

INFORMATION STORAGE AREA _39_

MEMORY _22_

# FIG. 10

49

40

41
CPU

44
INPUT/OUTPUT DEVICE

45
R/W UNIT

46
NETWORK I/F

47

43
STORAGE UNIT

PROCESSING PROGRAM 50

COMMUNICATION PROCESS 52

LOAD RESPONSE PROCESS 53

MAIN PROCESSING PROCESS 54

SWITCHING PROCESSING PROCESS 55

INFORMATION STORAGE AREA 59

42
MEMORY

# FIG. 11

# FIG. 12

420

| ADDRESS | ROLE | TOPIC |
|---------|------|-------|
| xx.xx.xx.xx | MANAGEMENT | – |
| yy.yy.yy.yy | RECEIVE DATA | A,B,··· |
| : | : | : |

# FIG. 13

220

| TOPIC | DATA ID | DATA ENTITY |
|-------|---------|-------------|
| A,B | aaa | xx.XML |
| C | bbb | xx.JPG |
| : | : | : |

# FIG. 14

120

| ADDRESS | TASK ID |
|---------|---------|
| xx.xx.xx.xx | a123,b222,··· |
| yy.yy.yy.yy | c321 |
| : | : |

# FIG. 15

320

| TASK ID | EXECUTION FILE |
|---------|----------------|
| a123 | aaa,jar |
| b222 | bbb.jar |
| : | : |

# FIG. 16

122

| ADDRESS | ROLE | RESOURCE | USAGE RATE |
|---|---|---|---|
| xx.xx.xx.xx | RECEIVE DATA | CPU | 20% |
| | | MEMORY | 30% |
| | | : | : |
| yy.yy.yy.yy | TSK PROCESSING | CPU | 70% |
| | | : | : |

# FIG. 17

124

| ADDRESS | BANDWIDTH |
|---------|-----------|
| xx.xx.xx.xx | x Mbps |
| yy.yy.yy.yy | y Mbps |
| : | : |

FIG. 18

MANAGEMENT SERVER ~100

DATA RECEPTION SERVER ~200

TASK PROCESSING SERVER ~300A

400 ~ DNS SERVER

S50 — THERE IS TASK PROCESSING SERVER WHOSE LOAD EXCEEDS THRESHOLD?

NO

YES — TRANSMIT CALCULATION REQUEST

S52

S54 — CALCULATE DATA MOVEMENT AMOUNT AND MOVEMENT TIME FOR TOPIC

S58 — TRANSMIT CALCULATION RESULT

S56

DETERMINE SWITCHING TARGET

200A — DATA RECEPTION SERVER (SWITCHING TARGET)

200B — DATA RECEPTION SERVER (MOVEMENT DESTINATION)

TRANSMIT SWITCHING REQUEST

S60-1

TRANSMIT REQUEST FOR ROUTING DESTINATION CHANGE — S60-2

S68 — CHANGE ROUTING DESTINATION

SPECIFY MOVEMENT START POSITION ~ S62

S64 — START MOVEMENT

S66 — MOVEMENT COMPLETE?

NO

YES — S70-1

TRANSMIT REQUEST FOR READ DESTINATION SWITCH

S72-1 — INTERRUPT READING

INQUIRE OF ROUTING — S72-2

TRANSMIT MOVEMENT COMPLETION NOTICE — S70-2

CHANGE READ DESTINATION AND RESTART READING ~ S74

TRANSMIT READ RESTART NOTICE — S76

TRANSMIT TASK ALLOCATION REQUEST — S78

SWITCH TO TASK PROCESSING ~ S80

FIG. 19

# FIG. 20

Europäisches
Patentamt

European
Patent Office

Office européen
des brevets

**EUROPEAN SEARCH REPORT**

Application Number

EP 20 18 2855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/100960 A1 (SHIGETA SOICHI [JP]) 9 April 2015 (2015-04-09) * the whole document * ----- | 1-15 | INV. G06F9/48 |

TECHNICAL FIELDS
SEARCHED (IPC)

G06F

The present search report has been drawn up for all claims

| Place of search | Date of completion of the search | Examiner |
|---|---|---|
| The Hague | 20 November 2020 | Dewyn, Torkild |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 2855

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2020

| Patent document cited in search report | Publication date | Patent family member(s) | Publication date |
|---|---|---|---|
| US 2015100960 A1 | 09-04-2015 | JP 6123626 B2<br>JP 2015075898 A<br>US 2015100960 A1 | 10-05-2017<br>20-04-2015<br>09-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015503811 A
- JP 2011091624 A
- JP 2015022327 A